# EUROPEAN PATENT APPLICATION

(11) **EP 4 830 596 A1**
(43) Date of publication of application: **28.10.2026**
(21) Application number: 25756428.6
(22) Date of filing: 25.03.2025
(51) Int. Cl.: A47J 27/08

(54) **COOKER LID AND PRESSURE COOKER**

(30) Priority: 04.03.2025 CN 202520362519 U
(71) Applicant: Zhejiang Suntrue Houseware Tech Co., Ltd, Jinhua, Zhejiang 321200 (CN)
(72) Inventor: DONG, Xuelu, Jinhua, Zhejiang 321200 (CN); KE, Jian, Jinhua, Zhejiang 321200 (CN); LING, Guangping, Jinhua, Zhejiang 321200 (CN); HU, Yongning, Jinhua, Zhejiang 321200 (CN); ZHANG, Jiacun, Jinhua, Zhejiang 321200 (CN); TU, Yuke, Jinhua, Zhejiang 321200 (CN)
(74) Representative: Metida
(86) International application number: PCT/CN2025/084683
(87) International publication number: WO 2026/183896

(57) **Abstract**

The present specification discloses a cooker cover and a cooker. The cooker cover comprises a cover body, a driving mechanism and a plurality of movable inserting plates, the driving mechanism and the movable inserting plate are both provided on the cover body. A plurality of movable inserting plates which can slide in the radial direction of the cover body are arranged in the circumferential direction of the cover body; a plurality of guide mechanisms in one-to-one correspondence with a plurality of movable inserting plates are formed on the cover body, and the outer side wall of the movable inserting plate is matched with the corresponding guide mechanism, and the driving mechanism is used for driving the movable inserting plate to slide in the radial direction of the cover body, and the movable inserting plate can be locked with the cooker body from the inner side of the cooker body.

## Description

### TECHNICAL FIELD

The specification relates to the technical field of cookers, and in particular to a cooker cover and a pressure cooker.

### BACKGROUND

The pressure cooker has the characteristics of energy conservation, time saving and multiple cooking functions, and is favored by consumers. According to the physical phenomenon that the boiling point of liquid would be improved at higher air pressure, the food stewing efficiency is improved by applying pressure to the food.

The pressure cooker generally comprises a cooker body and a cooker cover. In order to form a high-pressure effect, the cooker cover and the cooker body are usually locked in a sealed mode. In the related art, a telescopic locking structure is provided on the cooker cover of the pressure cooker, so that close sealing between the cooker cover and the cooker body is achieved. The telescopic locking structure has the advantage of being convenient to operate; however, in use, the locking component of the telescopic locking structure needs to slide in the radial direction of the cooker cover, in the sliding process of the locking component, clamping is prone to being generated, and normal use of the cooker cover is affected when the locking component is serious, especially when the size of the locking component is large.

### SUMMARY

The purpose of the present application is to solve at least one of the technical problems in the related art to a certain extent. Therefore, the present specification provides a cooker cover and a pressure cooker, the cooker cover has a good guiding effect, the movement stability of the movable inserting plate is improved, and therefore clamping is avoided.

In order to achieve the above purpose, the first aspect of the specification discloses a cooker cover. The cooker cover comprises a cover body. The cooker cover further comprises a driving mechanism and a plurality of movable inserting plates, the driving mechanism and the movable inserting plate are both provided on the cover body. A plurality of movable inserting plates which can slide in the radial direction of the cover body are arranged in the circumferential direction of the cover body. A plurality of guide mechanisms in one-to-one correspondence with a plurality of movable inserting plates are formed on the cover body, and the outer side wall of the movable inserting plate is matched with the corresponding guide mechanism, and the driving mechanism is used for driving the movable inserting plate to slide in the radial direction of the cover body, so that the outer side wall of the movable inserting plate slides along the corresponding guide mechanism, and the movable inserting plate can be locked with the cooker body from the inner side of the cooker body.

Furthermore, the movable inserting plate comprises a connecting portion and an inserting portion, one end of the connecting portion is connected to the driving mechanism, the other end of the connecting portion is connected to the inserting portion, the length of the inserting portion in the circumferential direction of the cooker cover is greater than the length of the connecting portion in the circumferential direction of the cooker cover; and the guide mechanism comprises an inner guide groove and an outer guide groove which are sequentially arranged from inside to outside in the radial direction of the cooker cover, the outer side wall of the connecting portion is matched with the inner guide groove, and the outer side wall of the inserting portion is matched with the outer guide groove.

Furthermore, the cover body comprises an outer cover and an inner base, the outer cover and the inner base are snap-fitted to form an accommodation cavity, the inner guide groove is provided in the accommodation cavity, the outer guide groove penetrates the side wall of the accommodation cavity, and the driving mechanism can drive the inserting portion to slide along the outer guide groove, so that the inserting portion can extend out of or retract into the accommodation cavity.

Furthermore, the inner base comprises a reinforcing support member and a guide support member, the guide support member is arranged on the top side of the reinforcing support member, the reinforcing support member and the guide support member are respectively connected to the outer cover; a plurality of first inner limiting tables distributed at intervals in the circumferential direction of the cooker cover and a plurality of first outer limiting tables distributed at intervals in the circumferential direction of the cooker cover are formed on the top surface of the guide support member, and the first outer limiting tables are located on the outer side of the first inner limiting tables.

A plurality of first inner limiting tables are divided into a plurality of groups, each group comprises two first inner limiting tables, two first inner limiting tables in the same group are oppositely arranged, and the inner guide grove is defined by two first inner limiting tables in the same group; and the outer guide groove is defined by two adjacent first outer limiting tables.

Furthermore, the reinforcing support member comprises a central plane portion, a reinforcing portion, an edge planar section and a sealing mounting ring; the central planar section is connected to the inner side edge of the reinforcing portion; the outer edge of the reinforcing portion is connected to the edge planar section; the sealing mounting ring protrudes from the bottom surface of the edge planar section and forms a distance with the outer edge of the edge planar section, the bottom end of the sealing mounting ring obliquely extends towards the outer side of the edge planar section; and the cooker cover further comprises an elastic sealing ring sleeved on the outer side surface of the sealing mounting ring, and the top end of the elastic sealing ring abuts against the bottom surface of the edge planar section.

Furthermore, the outer cover comprises an outer panel, a mounting butt joint portion, a first shielding ring and a second shielding ring; the outer panel surrounds the mounting butt joint portion, the bottom side of the mounting butt joint portion protrudes towards the inner seat, and the mounting butt joint portion is connected to the central planar section; the second shielding ring is located at the outside of the outer panel and is connected to the second shielding ring; and the bottom end surface of the first shielding ring and the bottom end surface of the second shielding ring both protrude from the bottom of the outer panel, and the second shielding ring and the first outer limiting table are opposite in the axial direction of the cooker cover.

Furthermore, the outer cover comprises an outer panel, an annular plate and a plurality of second inner limiting tables, the annular plates and the second inner limiting tables both protrude from the bottom face of the outer panel, and a plurality of second inner limiting tables are distributed in the circumferential direction of the cooker cover and located on the inner side of the annular plate.

A plurality of second inner limiting tables are divided into a plurality of groups, each group comprises two second inner limiting tables, and two second inner limiting tables in the same group are oppositely arranged.

The inner guide groove is defined by two second inner limiting tables in the same group.

A plurality of outer guide grooves are formed in the annular plate and distributed in the circumferential direction of the annular plate.

Furthermore, the driving mechanism comprises a driving disk and an operation portion. The driving disk is rotatably arranged in the cover body, the first end of the operation portion is connected to the driving disk, and the second end of the operation portion extends out of the top surface of the cover body.

The driving disk is provided with a plurality of driving grooves extending in the circumferential direction which are arranged in one-to-one correspondence with a plurality of movable inserting plates, and the distance between each part of the driving grooves and the axis of the cooker cover gradually changes in the circumferential direction.

A matching portion is formed on the connecting portion, and the matching portion is inserted into the corresponding driving groove; and the operation portion is operated to drive the driving disk to rotate, thereby driving the movable inserting plate to move in the radial direction of the cover body.

Furthermore, the driving disk comprises a driving body and a central driving portion protruding from the top surface of the driving body;a distance in the axial direction of the cooker cover is formed between the connecting portion and the inserting portion; and the movable inserting plate further comprises a vertical plate connecting the connecting portion and the inserting portion, the matching portion is formed on the connecting portion, the connecting portion is opposite to the central driving portion, the inserting portion is opposite to the driving body, and the vertical plate is opposite to the outer side surface of the central driving portion.

Furthermore, the operation portion is provided on an outer cover of the cover body and the operation portion is rotatably around its own axis; and an avoidance groove is provided on the top surface of the outer cover, and the operation portion is connected to the driving disk by means of a connecting member penetrating through the avoidance groove.

Furthermore, the movable inserting plate comprises a flange which is provided at the outer edge of the movable inserting plate and protrudes from the bottom surface of the movable inserting plate in the axial direction of the cooker cover.

Furthermore, the plurality of movable inserting plates are distributed around the axis of the cover body, and the combined length of a plurality of inserting portions along the circumferential direction of the cover body is not less than 60% of the circumferential length of the outer side surface of the movable inserting plate along the circumferential direction of the cover body.

The second aspect of the present specification discloses a pressure cooker. The pressure cooker comprises a cooker cover according to the first aspect and a cooker body. An annular inner protrusion around the axis of the cooker body is formed on the inner wall of the cooker body, and when the cooker cover buckle covers the cooker body, the driving mechanism can drive the movable plug plate to extend outwards to the bottom side of the inner protrusion.

Furthermore, an annular conical sealing portion located on the bottom side of the inner protrusion is formed on the inner wall of the cooker body, the diameter of the top end of the conical sealing portion is larger than the diameter of the bottom end of the conical sealing portion, the cooker cover further comprises an elastic sealing ring sleeved on the cover body, and when the cooker cover buckle covers the cooker body, the elastic sealing ring abuts against the conical sealing portion to form a seal between the cooker cover and the cooker body.

According to the cooker cover provided by the present specification, the movable inserting plate is provided inside the cover body. The movable inserting plate may be locked with the cooker body in an internal and external telescopic mode. Compared with a clamp-type pressure cooker and a rotary pressure cooker in the related art, the cooker cover provided by the specification is simple in structure and small in material consumption, and the cooker cover provided by the present specification can effectively reduce the complexity of the edge structure of the cooker body matched with the cooker cover, so that the overall manufacturing cost of the pressure cooker is reduced.

In addition, in the pressure cooker provided by the present specification, a sealing pressure block and an elastic sealing ring extend outwards in the radial direction of the cooker body, so that sealing of the cooker cover and the cooker body can be achieved without controlling the relative rotation angle of the cooker cover and the cooker body. Compared with a rotary pressure cooker in the related art, the convenience of using by a user and the user experience of the pressure cooker provided by the present specification may be improved.

The guide mechanism in the cooker cover provided by the present specification comprises an inner guide portion and an outer guide portion, so that the multiple guide effect can be achieved on the movable insertion plate, and the movement stability of the movable insertion plate is improved. Besides, the guide mechanism is matched with the outer side wall of the corresponding movable inserting plate for guide limiting, and the clamping resistance of the movable inserting plate in the movement process can be avoided. Moreover, the guide mechanism provided by the present specification is particularly suitable for the movable inserting plate with a large size.

In addition, in the present specification, the combined length of the arc-shaped surfaces of the plurality of movable inserting plates is defined, so that when the cooker cover is locked with the cooker body, the locking length between the movable inserting plate and the cooker body is longer, the locking area is increased, the locking stability and the locking strength can be improved, and the thickness of the movable inserting plate can be correspondingly reduced.

These features and advantages of the cooker cover and the pressure cooker provided by the present specification will be disclosed in detail in the following detailed description and drawings. The preferred embodiments or means of the cooker cover and the pressure cooker provided by the present specification will be described in detail in conjunction with the accompanying drawings, but are not intended to limit the technical solutions of the present application. In addition, the features, elements and components appearing in each of the following and drawings are provided with a plurality, and different symbols or numbers are marked for convenience of representation, but all represent the same or similar structures or functions.

### BRIEF DESCRICRIPTION OF THE DRAWINGS

The present application will be further described with reference to the accompanying drawings in the following:
FIG. 1 is a schematic cross-sectional view of the cooker cover according to one embodiment of the present specification;
FIG. 2 is perspective view showing an overall appearance of the pressure cooker according to one embodiment of the present specification;
FIG. 3 is a structural view of the driving disk and the movable inserting plate according to one embodiment of the present specification;
FIG. 4 is a structural view of the movable inserting plate and the guide support member according to one embodiment of the present specification;
FIG. 5 is a structural view of the reinforcing support member according to one embodiment of the present specification;
FIG. 6 is a structural view of the movable inserting plate according to one embodiment of the present specification;
FIG. 7 is an exploded view of the cooker cover according to one embodiment of the present specification;
FIG. 8 is a schematic cross-sectional view of the cooker cover according to one embodiment of the present specification;
FIG. 9 shows an overall structure of a pressure cooker with a handle according to one embodiment of the present specification;
FIG. 10 is a sectional view of a cooker body according to one embodiment of the present specification;
FIG. 11 is a sectional view of an assembly structure of a cooker cover and a cooker body according to one embodiment of the present specification;
FIG. 12 is an enlarged view at A in FIG. 11 in which the movable inserting plate and the cooker body are in a locked state;
FIG. 13 is a structural view of an assembly of a movable inserting plate and an outer cover according to one embodiment of the present specification;
FIG. 14 is a structural view of a movable inserting plate and a driving disk according to one embodiment of the present specification;
FIG. 15 is a structural view of a movable inserting plate according to one embodiment of the present specification;
FIG. 16 is an exploded view of a cooker cover according to one embodiment of the present specification.

### Reference numerals:

100, cover body; 110, inner base; 111, reinforcing support member; 1111, central planar section; 1112, reinforcing portion; 1113, edge planar section; 1114, sealing mounting ring;
112, guide support member; 1121, first inner limiting table; 1122, the first outer limiting tables; 1123, first limiting flange;
120, outer cover; 121, outer panel; 122, mounting butt-joint portion; 123, first shielding ring; 124, second shielding ring; 125, second inner limiting table; 126, second outer limiting table; 127, annular plate;
130, elastic sealing ring;
140, driving mechanism; 141, driving disk; 1411, driving slot; 1412, second limiting flange; 1413, central driving portion; 1414, driving body; 142, operation portion;
150, movable inserting plate; 151, first connecting portion; 152, first inserting portion; 153, second connecting portion; 154, second inserting portion; 155, vertical plate;
200, cooker body; 210, inner table; 220, conical sealing portion; 230, handle.

### DETAILED DESCRIPTION

Embodiments of the present specification are described in detail below, and the exemplary embodiments are shown in the accompanying drawings, in which the same or similar reference numerals refer to the same or similar elements or elements with the same or similar functions throughout. The embodiments in the specification are intended to explain the present application, and cannot be understood as a limitation to the present application.

Reference in this specification to " one embodiment " or " an example " or " an example " means that a particular feature, structure, or characteristic described in connection with the embodiment itself may be included in at least one embodiment disclosed herein. The appearances of the phrase " in one embodiment " in various places in the specification are not necessarily all referring to the same embodiment.

One embodiment of the present specification discloses a cooker cover. The cooker cover comprises a cover body 100, a driving mechanism 140 and a plurality of movable inserting plates 150. The driving mechanism 140 and the movable inserting plate 150 are both arranged on the cover body 100. A plurality of movable inserting plates 150 are arranged in the circumferential direction of the cover body 100, and the movable inserting plate 150 can slide in the radial direction of the cover body 100.

A plurality of guide mechanisms in one-to-one correspondence with a plurality of movable inserting plates 150 are formed on the cover body 100, and the outer side wall of the movable inserting plate 150 is matched with the corresponding guide mechanism. The driving mechanism 140 is used for driving the movable inserting plate 150 to move in the radial direction of the cover body 100, so that the outer side wall of the movable inserting plate 150 slides along the corresponding guide mechanism, and finally, the movable inserting plate 150 is locked to the cooker body 200 from the inner side thereof.

According to the cooker cover provided by the embodiment of the present specification, the movable inserting plate 150 moving in the radial direction of the cooker cover is adopted to achieve locking and unlocking with the cooker body 200. When the cooker body 200 is sealed by using the cooker cover, the relative positions of the cooker cover and the cooker body 200 in the circumferential direction do not need to be controlled, and the operation is more convenient. On the whole structure, the movable inserting plate 150 and the corresponding driving mechanism 140 are both arranged inside the cooker cover, so that the appearance of the cooker cover is similar to that of a common cooker cover. A user does not easily consider the cooker cover provided by the present specification and the pressure cooker using the same as a dangerous pressure container, therefore the fear feeling of a user on the pressure cooker can be effectively avoided.

In addition, in the embodiment of the present specification, the number of the movable inserting plates 150 arranged in the cooker cover is generally not less than three. In an optional embodiment, a plurality of movable inserting plates 150 are uniformly distributed in the circumferential direction of the cover body 100. After a plurality of movable inserting plates 150 being locked with the cooker body 200, the effect of uniform locking along the circumferential direction of the cooker body 200 can be achieved, and the locking stability is improved.

In the present embodiment, the specific structure of the movable inserting plate 150 is not limited, as long as by which the cooker body 200 can be locked with the cooker cover. It should be pointed out that the movable inserting plate 150 is plate-shaped, so that the overall thickness of the cooker cover can be reduced. Correspondingly, the volume of the cooker body 200 may be increased by using the cooker cover provided by the embodiment of the present specification, and the use requirement of a user can be better met.

In the specification, the specific driven mode of the driving mechanism 140 is not specifically limited, as long as by which the movable inserting plate 150 may be driven to move in the radial direction of the cover body 100. For example, the driving mode of the driving mechanism 140 may be a rotary driven mode, a linear driven mode, or the like.

According to the embodiment of the present specification, the guide mechanism may be matched with the outer side wall of the corresponding movable inserting plate 150. Compared with a means of arranging the guide mechanism on the inner side of the movable inserting plate, the guide mechanism in the embodiment of the specification may guide the movable inserting plate 150 in a longer range, so that the stability of the movable inserting plate 150 may be improved. According to the embodiment of the specification, the guide mechanism may be generally provided in a form of a guide groove. During use, the movable inserting plate 150 is located in the corresponding guide groove, and two side walls of the movable inserting plate 150 are opposite to two side walls of the corresponding guide groove respectively.

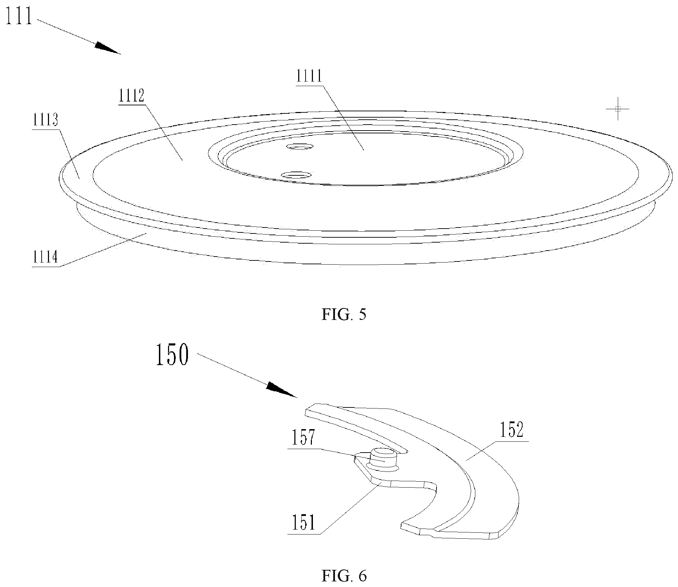

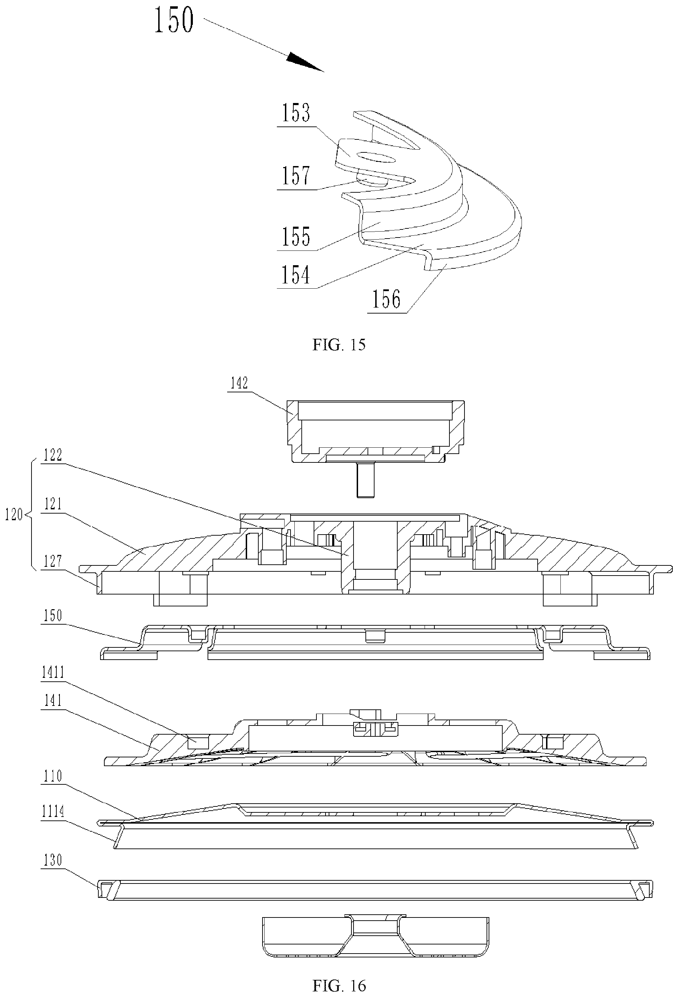

As one embodiment of the present application, referring to FIG. 6 and FIG. 15, the movable inserting plate 150 comprises a connecting portion and an inserting portion. One end of the connecting portion is connected to the driving mechanism 140, and the other end of the connecting portion is connected to the inserting portion. The length of the inserting portion in the circumferential direction of the cooker cover is greater than the length of the connecting portion in the circumferential direction of the cooker cover. The guide mechanism comprises an inner guide groove and an outer guide groove which are sequentially arranged from inside to outside in the radial direction of the cooker cover, the outer side wall of the connecting portion is matched with the inner guide groove, and the outer side wall of the inserting portion of the corresponding movable inserting plate 150 is matched with the outer guide groove.

In order to illustrate the structure of the movable inserting plate 150 more clearly, the structure of the movable inserting plate 150 is described with reference to FIG. 6 and FIG. 15. As shown, the inserting portion of the movable inserting plate 150 comprises a first inserting portion 152 and a second inserting portion 154, and the connecting portion of the movable inserting plate 150 comprises a first connecting portion 151 and a second connecting portion 153.

The guide mechanism in the embodiment of the present application comprises an inner guide groove and an outer guide groove. The inner guide groove and the outer guide groove may be matched with the connecting portion and the inserting portion of the corresponding movable inserting plate 150 respectively in the radial direction of the cooker cover. According to the embodiment of the present application, the circumferential width of the connecting portion is different from that of the inserting portion, and the connecting portion and the inserting portion form a T-shaped structure together. The connecting portion and the inserting portion with different width can be limited by the inner guide groove and the outer guide groove respectively, and the movement stability of the movable inserting plate 150 is improved.

In addition, in the embodiment of the present application, the length of the inserting portion in the circumferential direction of the cooker cover is larger, so that when the inserting portion is locked with the cooker body 200, a larger locking area can be obtained, and the locking strength and the locking stability may be improved. It should be noted that the thickness of the movable inserting plate 150 may be reduced by increasing the locking area.

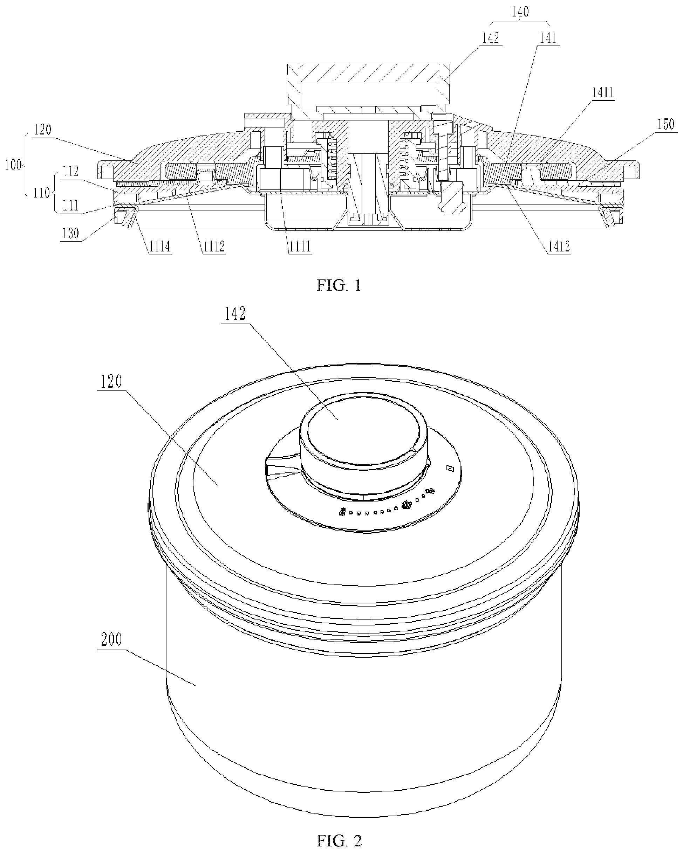

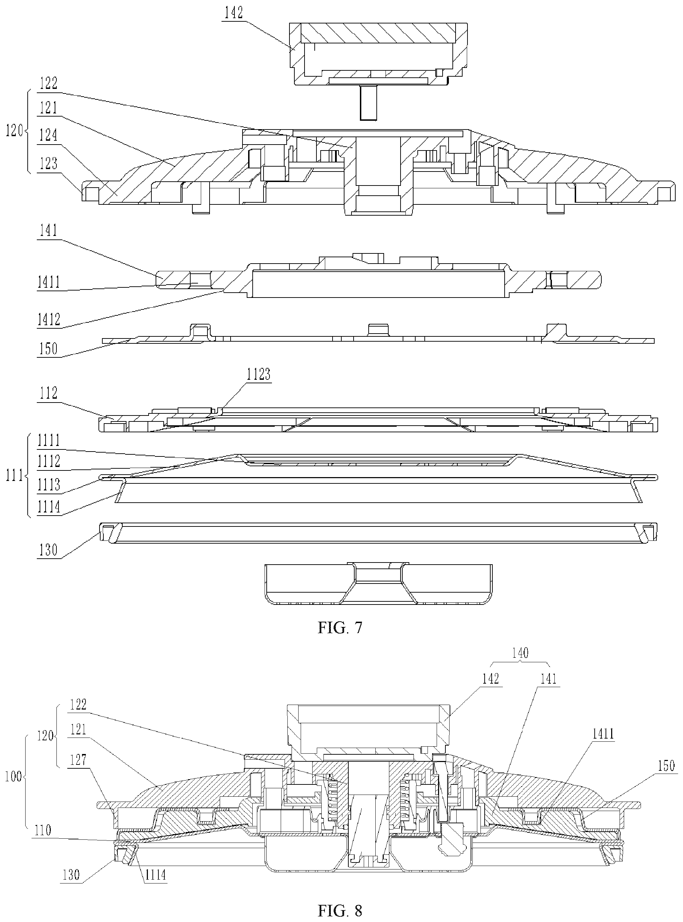

As one embodiment of the present application, referring to FIG. 1 and FIG. 8, the cover body 100 comprises an outer cover 120 and an inner base 110, the outer cover 120 and the inner base 110 are snap-fitted to form an accommodating cavity therebetween, the inner guide groove is formed in the accommodating cavity, the outer guide groove penetrates through the side wall of the accommodating cavity, and the driving mechanism 140 may drive the inserting portion of the corresponding movable inserting plate to slide along the outer guide groove, so that the inserting portion may extend out of or retract into the accommodating cavity.

In the embodiment of the present application, when the cooker cover does not need to be locked with the cooker body, the movable inserting plate 150 may be completely located in the accommodating cavity, so that the movable inserting plate 150 cannot be seen from the outside of the cooker cover, the overall appearance of the cooker cover is improved. When the cooker cover buckle covers the cooker body 200 and is locked therewith, the movable inserting plate 150 is locked with the inner wall of the cooker body 200 from the inner side of the cooker body 200, and the movable inserting plate 150 cannot be seen from the outside of the cooker cover.

As one embodiment of the present application, referring to FIG. 1 and FIG. 7, the inner base 110 comprises a reinforcing support member 111 and a guide support member 112. The guide support member 112 is provided on the top side of the reinforcing support member 111, and the reinforcing support member 111 and the guide support member 112 are connected to the outer cover 120 respectively. A plurality of first inner limiting tables 1121 distributed at intervals in the circumferential direction of the cooker cover and a plurality of first outer limiting tables 1122 distributed at intervals in the circumferential direction of the cooker cover are formed on the top surface of the guide support member 112, and the first outer limiting tables 1122 are located on the outer side of the first inner limiting tables 1121 in the radial direction of the cooker cover.

A plurality of first inner limiting tables 1121 are divided into a plurality of groups, each group comprises two first inner limiting tables 1121, and two first inner limiting tables 1121 of the same group are oppositely arranged. The inner guide groove is defined by two first inner limiting tables 1121 in the same group define the inner guide grooves. The outer guide groove is defined by two adjacent first outer limiting tables 1122.

The movable inserting plate 150 in the present embodiment is slidably connected to the inner base110. Specifically, a first inner limiting table 1121 and a first outer guide portion which are matched with the movable inserting plate 150 are arranged on the guide support member 112 of the inner base110, and first connecting portion 151 and the first inserting portion 152 on the movable inserting plate 150 may be in sliding fit with the first inner limiting table 1121 and the first outer guide portion respectively. Thus, multiple guiding effects are provided for the movable inserting plate 150, and the movement of the movable inserting plate 150 is more stable. The first connecting portion 151 of the movable inserting plate 150 is connected with the driving disk 141, and the first inserting portion 152 may extend out of the cover body 100 to be locked and matched with the cooker body 200. As the movable inserting plate 150 is divided into two parts, the specific structure of the movable inserting plate 150 may be reasonably designed according to different functions. As shown in FIG. 6 and FIG. 15, the movable inserting plate 150 is of a T-shaped structure as a whole, the length size of the first inserting portion 152 in the circumferential direction of the cooker cover is relatively large, a large locking area may be formed between the cooker body 200 and the first inserting portion 152, and then the locking stability is improved. The size of the first connecting portion 151 is relatively small, materials may be saved, and the overall layout of the cooker cover is facilitated.

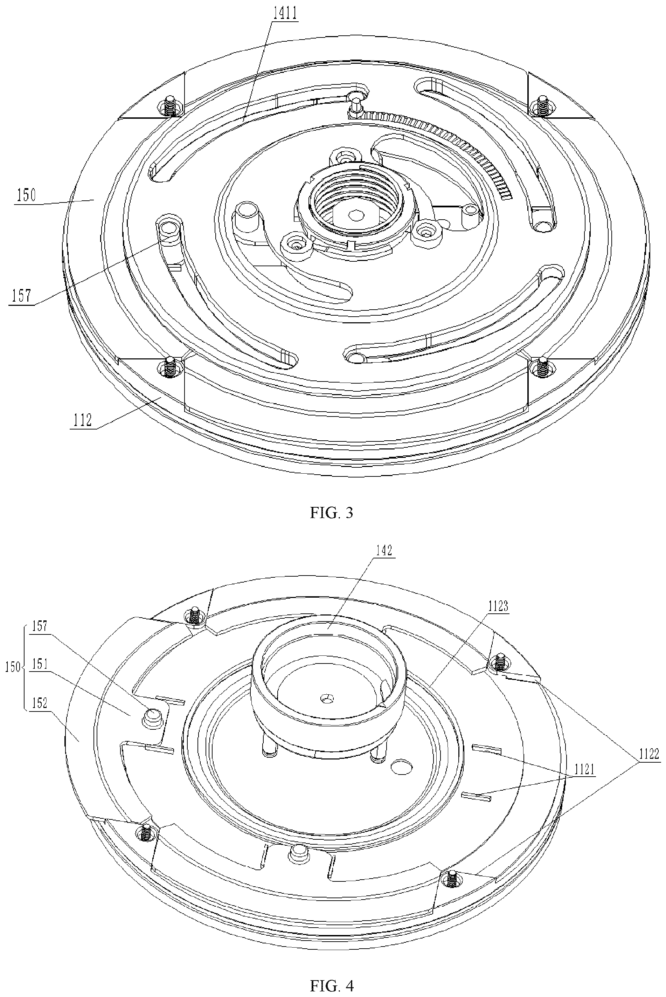

According to the present embodiment, connection between the first connecting portion 151 and the driving disk 141 may be achieved through cooperation of the pin shaft and the driving slot 1411 as shown in FIG. 3. Besides, connection between the first connecting portion 151 and the driving disk 141 may be achieved through wedge-shaped cooperation (matched with a spring) between one protrusion and another protrusion. In the embodiments of the present embodiments, there are no specific restrictions on how to achieve the connection between the driving disk 141 and the first connecting portion 151, as long as it can ensure that the rotation of the driving disk 141 drives the movable inserting plate 150 to stretch out and draw back in the radial direction of the cooker cover.

As one embodiment of the present specification, referring to FIG. 5 and FIG. 7, the reinforcing support member 111 comprises a central planar section 1111, a reinforcing portion 1112, an edge planar section 1113, and a sealing mounting ring 1114. The central planar section 1111 is connected to the inner edge of the reinforcing portion 1112. The outer edge of the reinforcing portion 1112 is connected to the edge planar section 1113. The sealing mounting ring 1114 protrudes from the bottom surface of the edge planar section 1113 and forms a gap with the outer edge of the edge planar section 1113. The bottom end of the sealing mounting ring 1114 extends obliquely towards the outer side of the edge planar section 1113. The cooker cover further comprises an elastic sealing ring 130 sleeved on the outer side surface of the sealing mounting ring 1114, and the top end of the elastic sealing ring 130 abuts against the bottom surface of the edge planar section 1113.

Due to the fact that a conical structure has better structural strength compared with a planar structure, as shown in the FIG.7, the reinforcing portion 1112 of the reinforcing support member 111 in the embodiment may be provided to be conical, enabling the reinforcing portion 1112 to possess relatively high structural strength. Of course, the embodiments of the present specification are not limited thereto, and the reinforcing portion 1112 may also be provided in other shapes, such as an arc.

In other embodiments, the central planar section 1111 may also be configured as a structure recessed within the inner edge of the reinforcing portion 1112 as shown in FIG. 5, so as to further improve the structural strength of the reinforcing support member 111. It should be noted that the conical side wall of the reinforcing portion 1112 in this embodiment is inclined from the outer side to the inner side toward the top side, as shown in FIG. 7.

The sealing mounting ring 1114 in the present embodiment forms a certain angle, which enables it to better support and fix the elastic sealing ring 130.

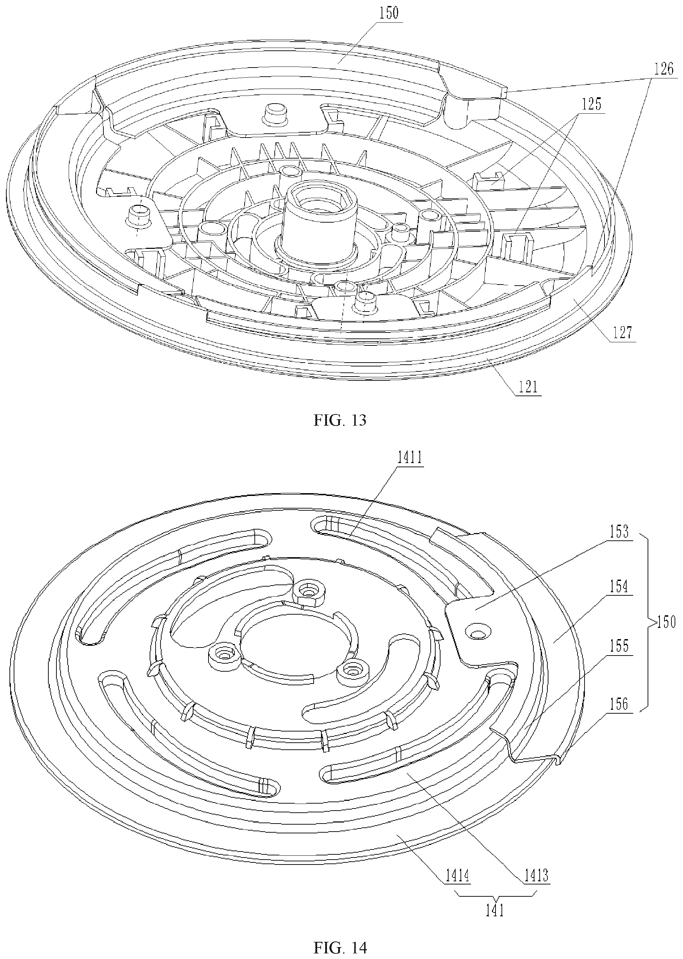

As one embodiment of the present specification, with reference to FIG. 8 and FIG. 13, the outer cover 120 comprises an outer panel 121, a mounting butt-joint portion 122, a first shielding ring 123, and a second shielding ring 124. It can be readily understood that both the first shielding ring 123 and the second shielding ring 124 are annular.

The outer panel 121 surrounds the mounting butt-joint portion 122, and the bottom side of the mounting butt-joint portion 122 protrudes towards the inner base110 and is connected to the central planar section 1111. Both the first shielding ring 123 and the second shielding ring 124 protrude from the bottom of the outer panel 121, the first shielding ring 123 is located on the outer side of the second shielding ring 124, and the second shielding ring 124 and the first outer limiting table 1122 are in opposition along the axial direction of the cooker cover.

The outer cover 120 comprises an outer panel 121, an annular plate 127 and a plurality of second inner limiting tables 125. Both the annular plate 127 and the second inner limiting table 125 protrude from the bottom surface of the outer panel 121. A plurality of the second inner limiting tables 125 are arranged circumferentially around the cooker cover and are located on the inner side of the annular plate 127.

A plurality of the second inner limiting tables 125 are divided into several groups, with each group consisting of two second inner limiting tables 125. Two second inner limiting tables 125 within the same group are positioned opposite to each other, and they together define the inner guide grooves.

A plurality of outer guide grooves are formed in the annular plate 127, distributed along its circumferential direction.

On one hand, the outer cover 120 is connected with the central planar section 1111 on the reinforcing support member 111 of the inner base110 via the mounting butt-joint portion 122, and on the other hand, the outer panel 121 and the guide support member 112 are connected by screws that are circumferentially distributed around the axis of the cooker cover, so that the connection reliability between the outer cover 120 and the inner base110 may be enhanced.

According to the embodiment, the first shielding ring 123 and the second shielding ring 124 are also provided. The first shielding ring 123 is positioned on the outer side of the second shielding ring 124. When the movable inserting plate 150 is in a retracting state, the second shielding ring 124 may shield it; and when the movable inserting plate 150 is in a extending state, the first shielding ring 123 may shield it. As shown in FIG. 1 and FIG. 7, a certain gap exists between the first shielding ring 123 and the second shielding ring 124.

As can be seen from the preceding text, when installing the movable inserting plate 150 provided by the embodiment of the present specification, it may be matched with either the outer cover 120 or the inner base110. Of course, the embodiments of the present specification are not limited thereto, and reasonable designs may be performed according to actual needs. When the guide mechanism is provided on the outer cover 120, the number of components of the cooker cover may be reduced, and the overall structure may be simplified.

As shown in FIG. 13, the movable inserting plate 150 is fitted with the outer cover. A second inner limiting table 125 is provided on the outer cover, while an outer guide groove is formed on the annular plate 127. Second outer limiting tables 126 are arranged on both sides of the outer guide groove, and in this way, the second outer limiting table 126 and the second inner limiting table 125 may respectively engage with the second inserting portion 154 and the second connecting part 153.

As an embodiment of the present specification, the driving mechanism 140 comprises a driving disk 141 which is rotatably provided in the cover body 100 and an operation portion 142. The first end of the operation portion 142 is connected with the driving disk 141, and the second end of the operation portion 142 extends through the top surface of the cover body 100. The driving disk 141 is provided with a plurality of driving slots 1411 extending in the circumferential direction thereof, and a plurality of the driving slots 1411 are provided in one-to-one correspondence with a plurality of the movable inserting plates 150. The radial distance from any point on a driving slot 1411 to the axis of the cooker cover varies progressively along its circumference. A matching part 157 is provided at one end of the movable inserting plate 150, and the matching part 157 is accommodated in the driving slot 1411. The operation portion 142 is actuated to drive the driving disk 141 to rotate, and then the movable inserting plate 150 is driven to move in the radial direction of the cover body 100.

As shown in FIG. 3 and FIG. 14, the driving slot 1411 in the present embodiment engages with the matching part 157 (typically designed as a pin shaft) of the movable inserting plate 150. The matching part 157 is configured to both rotate and slide relative to the driving slot 1411. Since the radial distance from different points on the driving slot 1411 to the axis of the driving disk 141 varies, when the driving disk 141 rotates, the movable inserting plate 150 may be driven to slide in the radial direction.

The driving mechanism 140 in the present embodiment comprises a driving disk 141 and an operation portion 142. The operation portion 142 is provided externally to the cover body 100, and typically, the operation portion 142 may be provided at the center position of the top of the cover body 100. As shown in FIG. 4, through the above arrangement, operation of a user is facilitated, and the attractiveness of the overall appearance of the pressure cooker may be improved.

As one embodiment of the present application, with reference to FIG. 4, a first limiting flange 1123 corresponding to the driving disk 141 is further provide on the top surface of the guide support member 112, and a second limiting flange 1412 matched with the first limiting flange 1123 is provided on the bottom surface of the driving disk 141. Both the first limiting flange 1123 and the second limiting flange 1412 are annular, and the first limiting flange 1123 and the second limiting flange 1412 are nested inside and outside the cooker cover in the radial direction, thereby constraining the radial position of the driving disk 141.

In the embodiment of the present specification, the annular first limiting flange 1123 and the annular second limiting flange 1412 are mutually nested during assembly. The first limiting flange 1123 may be provided either on the outer side of the second limiting flange 1412 or on the inner side of the second limiting flange 1412. During installation, the first limiting flange 1123 may provide radial constraint to the driving disk 141, enabling stable rotation of the driving disk 141 about the axis of the nested limiting flanges.

As one embodiment of the present specification, referring to FIG. 14, FIG. 15, and FIG. 16, the driving disk 141 comprises a driving body 1414 and a central driving portion 1413 protruding from the top surface of the driving body 1414. The connecting portion and the inserting portion are axially spaced along the axis of the cooker cover. The movable inserting plate 150 further comprises a vertical plate 155 connecting the connecting portion and the inserting portion, wherein, the connecting portion is provided with the matching portion 157. The connecting portion is positioned opposite to the central driving portion 1413, the inserting portion is positioned opposite to the driving body 1414, and the vertical plate 155 is positioned opposite to the outer side surface of the central driving portion 1413.

In the present embodiment, the driving disk 141 and the movable inserting plate 150 are arranged as step structures matched with each other, so that during design, the driving disk 141 and the movable inserting plate 150 with the step structure with the height difference may enhance the structural strength of the driving disk 141 and the movable inserting plate 150 on one hand, and on the other hand, the function of the reinforcing support member 111 in the inner base110 mentioned above may be replaced, thereby reducing the number of components of the cooker cover.

As one embodiment of the present specification, referring to FIG. 13, the operating portion is rotatably mounted on the outer cover of the cover body, the top surface of the outer cover is provided with an avoiding groove, and the operating portion is connected with the driving disk via a connecting member penetrating through the avoiding groove.

As one embodiment of the present specification, referring to FIG. 15, the movable inserting plate 150 comprises a flange 156 provided at the outer peripheral edge of thereof. The flange 156 protrudes from the bottom surface of the movable inserting plate 150 in the axial direction of the cooker cover.

In the present embodiment, the design of the flange 156 increases the thickness at the outer peripheral edge of the second inserting part 154, thereby enhancing the locking strength.

In the related art, the pressure cooker with the locking structure of the movable inserting plate capable of stretching out and drawing back is usually provided with a through hole in the side wall of the cooker body. During actual use, the cooker body often needs to be tilted laterally to pour out food and soup, so that the length of the through hole in the cooker body in the circumferential direction of the cooker body cannot be excessively long ( to prevent food leakage through the through hole assembly during pouring), and therefore the circumferential length of the movable inserting plate is correspondingly short. To ensure adequate locking strength between the cooker cover and the cooker body under such conditions, a thicker inserting plate is generally required to withstand pressure. In addition, after the through hole is formed in the cooker body, food residues may easily enter the handle through the through hole, making cleaning difficult and causing residue accumulation.

In light of the foregoing, in one embodiment of the present specification, a plurality of movable inserting plates 150 are arranged circumferentially around the axis of the cover body 100, wherein the combined length of a plurality of the inserting portions along the circumferential direction of the cover body 100 is not less than 60% of the circumferential length of the outer side surface of the movable inserting plate 150 along the circumferential direction of the cover body 100.

In practical applications, where spatial constraints permit, the combined length of a plurality of the movable inserting plates 150 in the circumferential direction of the cover body 100 may be configured to be not less than 75% of the circumferential length of the of the cover body or greater.

As shown in FIG. 3 and FIG. 13, under the condition that the mutual movement between adjacent movable inserting plates 150 does not interfere with each other, the circumferential length of each movable inserting plate 150 is configured to a maximum possible value.

Referring to FIG. 2 and FIG. 9 to FIG. 12, a second aspect of the present specification discloses a pressure cooker, comprising a cooker cover and a cooker body 200. The cooker cover is configured in accordance with the cooker cover of the first aspect. An annular inner table 210 circumferentially around the axis of the cooker body 200 is formed on an inner wall of the cooker body 200. When the cooker cover buckle covers the cooker body 200, the movable inserting plate may be driven to extend outwardly to the bottom side of the inner table 210 by the driving mechanism 140 .

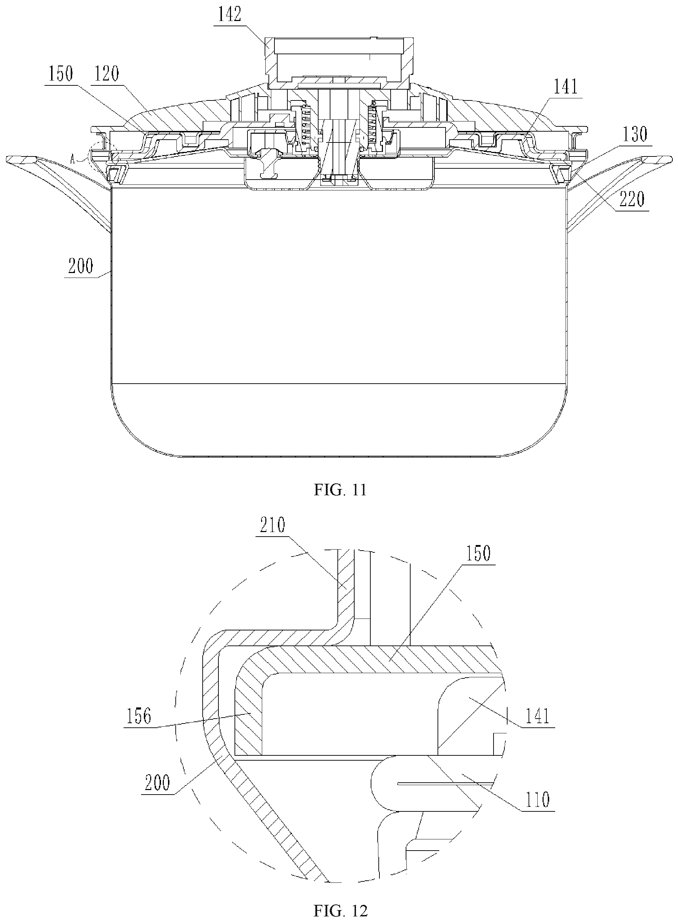

When in use, when locking the cooker cover and the cooker body 200 is required, referring to FIG. 11 and FIG. 12, at this time, the movable inserting plate 150 extends outwards from the cover body 100 and into a position beneath the inner table 210. A limiting effect is formed between the top surface of the movable inserting plate 150 and the bottom surface of the inner table 210. Under the upward force exerted by high pressure within the cooker body 200, the cooker cover tends to be lifted upward, however, due to the limiting effect between the movable inserting plate 150 and the inner table 210, the cooker cover may not be separated from the cooker body 200, thereby achieving a high-pressure locking effect between the cooker body 200 and the cooker cover.

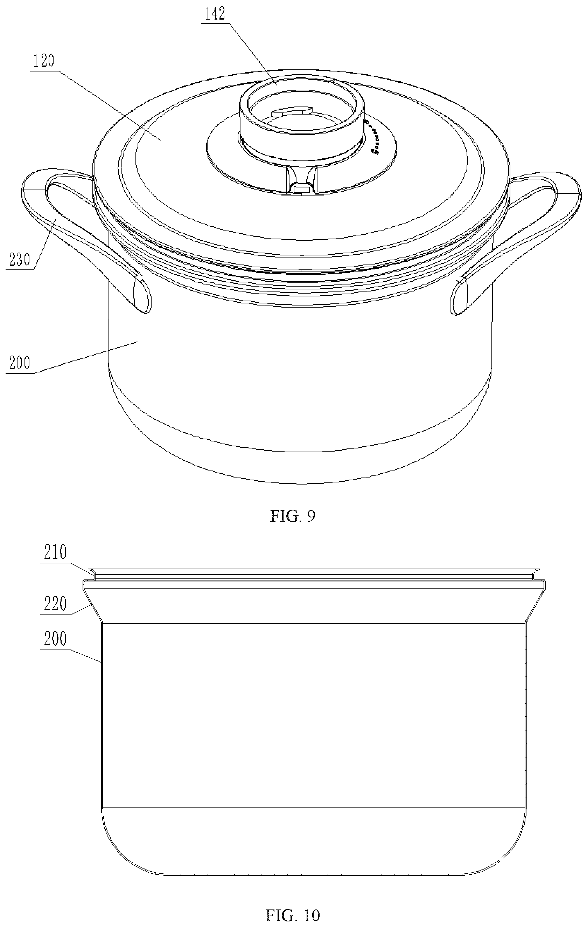

As one embodiment of the present specification, referring to FIG. 10 and FIG. 11, an annular conical sealing portion 220 formed on the inner wall of the cooker body 200, positioned on the bottom side of the inner table 210. The diameter of the top end of the conical sealing portion 220 is greater than that of its bottom end. The cooker cover comprises an elastic sealing ring 130 sleeved on the cover body 100, and under the condition that the cooker cover buckle covers the cooker body 200, the elastic sealing ring 130 abuts against the conical sealing portion 220 thereby forming a seal for the cooker body 200.

An annular conical sealing portion 220 located on the bottom side of the inner table 210 is formed on the inner wall of the cooker body 200. The diameter of the top end of the conical sealing portion 220 is greater than that of its bottom end, and under the condition that the cooker cover buckle covers the cooker body 200, the elastic sealing ring 130 abuts against the conical sealing part 220 to form a seal for the cooker body 200.

In the present embodiment, the conical sealing portion 220 is provided on the inner wall of the cooker body 200. When the cooker cover buckle covers the cooker body 200, the conical sealing portion 220 and the elastic sealing ring 130 are pressed against each other to form a seal. The conical structure provides an enhanced sealing effect.

Certainly, it is contemplated that during actual design, a handle 230 may be additionally provided on the outer wall of the cooker body 200, as shown in FIG. 9 and FIG. 11.

The above are only specific embodiments of the present application, but the scope of protection of the present application is not limited thereto, and a person skilled in the art should understand that the present application includes, but is not limited to, the content described in the accompanying drawings and the specific embodiments above. Any modifications that do not depart from the functional and structural principles of this application are intended to be included within the scope of the claims.

## Claims

1. A cooker cover, comprising a cover body (100), **characterized in that**, the cooker cover further comprises a driving mechanism (140) and a plurality of movable inserting plates (150), the driving mechanism (140) and the movable inserting plate (150) are both provided on the cover body (100);
a plurality of movable inserting plates (150) which can slide in the radial direction of the cover body (100) are arranged in the circumferential direction of the cover body (100);
a plurality of guide mechanisms in one-to-one correspondence with a plurality of movable inserting plates (150) are formed on the cover body (100), and the outer side wall of the movable inserting plate (150) is matched with the corresponding guide mechanism, and
the driving mechanism (140) is used for driving the movable inserting plate (150) to slide in the radial direction of the cover body (100), so that the outer side wall of the movable inserting plate (150) slides along the corresponding guide mechanism, and the movable inserting plate (150) can be locked with the cooker body from the inner side of the cooker body.

2. The cooker cover according to claim 1, **characterized in that**, the movable inserting plate (150) comprises a connecting portion and an inserting portion, one end of the connecting portion is connected to the driving mechanism (140), the other end of the connecting portion is connected to the inserting portion, the length of the inserting portion in the circumferential direction of the cooker cover is greater than the length of the connecting portion in the circumferential direction of the cooker cover; and
the guide mechanism comprises an inner guide groove and an outer guide groove which are sequentially arranged from inside to outside in the radial direction of the cooker cover, the outer side wall of the connecting portion is matched with the inner guide groove, and the outer side wall of the inserting portion of the corresponding movable inserting plate (150) is matched with the outer guide groove.

3. The cooker cover according to claim 2, **characterized in that**, the cover body (100) comprises an outer cover (120) and an inner base (110), the outer cover (120) and the inner base (110) are snap-fitted to form an accommodation cavity therebetween, the inner guide groove is formed in the accommodation cavity, the outer guide groove penetrates the side wall of the accommodation cavity, and the driving mechanism can drive the inserting portion of the corresponding movable inserting plate to slide along the outer guide groove, so that the inserting portion can extend out of or retract into the accommodation cavity.

4. The cooker cover according to claim 3, **characterized in that**, the inner base (110) comprises a reinforcing support member (111) and a guide support member (112), the guide support member (112) is provided on the top side of the reinforcing support member (111), the reinforcing support member (111) and the guide support member (112) are respectively connected to the outer cover (120);
a plurality of first inner limiting tables (1121) distributed at intervals in the circumferential direction of the cooker cover and a plurality of first outer limiting tables (1122) distributed at intervals in the circumferential direction of the cooker cover are formed on the top surface of the guide support member (112), and the first outer limiting tables (1122) are located on the outer side of the first inner limiting tables (1121);
a plurality of first inner limiting tables (1121) are divided into a plurality of groups, each group comprises two first inner limiting tables, and two first inner limiting tables (1121) in the same group are oppositely arranged, and
the inner guide groove is defined by two first inner limiting tables (1121) in the same group; the outer guide groove is defined by two adjacent first outer limiting tables (1122).

5. The cooker cover according to claim 4, **characterized in that**, the reinforcing support member (111) comprises a central planar section (1111), a reinforcing portion (1112), an edge planar section (1113) and a sealing mounting ring (1114);
the central planar section (1111) is connected to the inner side edge of the reinforcing portion (1112);
the outer edge of the reinforcing portion (1112) is connected to the edge planar section (1113);
the sealing mounting ring (1114) protrudes from the bottom surface of the edge planar section (1113) and forms a distance with the outer edge of the edge planar section (1113), the bottom end of the sealing mounting ring (1114) obliquely extends towards the outer side of the edge planar section (1113); and
the cooker cover further comprises an elastic sealing ring (130) sleeved on the outer side surface of the sealing mounting ring (1114), and the top end of the elastic sealing ring (130) abuts against the bottom surface of the edge planar section (1113).

6. The cooker cover according to claim 5, **characterized in that**, the outer cover (120) comprises an outer panel (121), a mounting butt-joint portion (122), a first shielding ring (123) and a second shielding ring (124);
the outer panel (121) surrounds the mounting butt-joint portion (122), the bottom side of the mounting butt-joint portion (122) protrudes towards the inner base (110), and the mounting butt-joint portion (122) is connected to the central planar section (1111);
the second shielding ring (124) is located at the outside of the outer panel (121) and is connected to the second shielding ring (124); and
the bottom end surface of the first shielding ring (123) and the bottom end surface of the second shielding ring (124) both protrude from the bottom of the outer panel (121), and the second shielding ring (124) and the first outer limiting table are opposite in the axial direction of the cooker cover.

7. The cooker cover according to claim 3, **characterized in that**, the outer cover (120) comprises an outer panel (121), an annular plate (127) and a plurality of second inner limiting tables (125), the annular plate (127) and the second inner limiting tables (125) both protrude from the bottom face of the outer panel (121), and a plurality of second inner limiting tables (125) are distributed in the circumferential direction of the cooker cover and located on the inner side of the annular plate (127),
a plurality of second inner limiting tables (125) are divided into a plurality of groups, each group comprises two second inner limiting tables (125), and two second inner limiting tables (125) in the same group are oppositely arranged;
the inner guide groove is defined by two second inner limiting tables (125) in the same group; and
a plurality of outer guide grooves are formed in the annular plate (127) and distributed in the circumferential direction of the annular plate (127).

8. The cooker cover according to claim 2, **characterized in that**, the driving mechanism comprises a driving disk (141) and an operation portion (142);
the driving disk (141) is rotatably arranged in the cover body (100), the first end of the operation portion (142) is connected to the driving disk (141), the second end of the operation portion (142) extends out of the top surface of the cover body (100);
the driving disk (141) is provided with a plurality of driving slots (1411) extending in the circumferential direction which are arranged in one-to-one correspondence with a plurality of movable inserting plates (150), and the distance between each part of the driving slots (1411) and the axis of the cooker cover gradually changes in the circumferential direction; and
a matching portion (157) is formed on the connecting portion, and the matching portion (157) is inserted into the corresponding driving slot (1411); and
the operation portion (142) is operated to drive the driving disk (141) to rotate, thereby driving the movable inserting plate (150) to move in the radial direction of the cover body (100).

9. The cooker cover according to claim 8, **characterized in that**, the driving disk (141) comprises a driving body (1414) and a central driving portion (1413) protruding from the top surface of the driving body (1414);
a distance in the axial direction of the cooker cover is formed between the connecting portion and the inserting portion; and
the movable inserting plate (150) further comprises a vertical plate (155) connecting the connecting portion and the inserting portion, the matching portion (157) is formed on the connecting portion, the connecting portion is opposite to the central driving portion (1413), the inserting portion is opposite to the driving body (1414), and the vertical plate (155) is opposite to the outer side surface of the central driving portion (1413).

10. The cooker cover according to claim 8, **characterized in that**, the operation portion (142) is provided on an outer cover (120) of the cover body (100) and the operation portion (142) is rotatably around its own axis; and
an avoidance groove is provided on the top surface of the outer cover (120), and the operation portion (142) is connected to the driving disk (141) by means of a connecting member penetrating through the avoidance groove.

11. The cooker cover according to claim 1, **characterized in that**, the movable inserting plate (150) comprises a flange (156) which is provided at the outer edge of the movable inserting plate (150) and protrudes from the bottom surface of the movable inserting plate (150) in the axial direction of the cooker cover.

12. The cooker cover according to claim 1, **characterized in that**, the plurality of movable inserting plates (150) are distributed around the axis of the cover body (100), and the combined length of a plurality of inserting portions along the circumferential direction of the cover body (100) is not less than 60% of the circumferential length of the outer side surface of the movable inserting plate (150) along the circumferential direction of the cover body (100).

13. A pressure cooker, comprising a cooker cover according to claim 1 and a cooker body (200), **characterized in that**, an annular inner protrusion (210) around the axis of the cooker body (200) is formed on the inner wall of the cooker body (200), and when the cooker cover buckle covers the cooker body (200), the driving mechanism (140) can drive the movable plug plate (150) to extend outwards to the bottom side of the inner protrusion (210).

14. The pressure cooker according to claim 13, **characterized in that**, an annular conical sealing portion (220) located on the bottom side of the inner protrusion (210) is formed on the inner wall of the cooker body (200), the diameter of the top end of the conical sealing portion (220) is larger than the diameter of the bottom end of the conical sealing portion (220), the cooker cover further comprises an elastic sealing ring (130) sleeved on the cover body (100), and when the cooker cover buckle covers the cooker body (200), the elastic sealing ring (130) abuts against the conical sealing portion (220) to form a seal between the cover body (100) and the cooker body (200).
